Europäisches Patentamt

European Patent Office

Office européen des brevets

(11) Numéro de publication: **0 032 852**
**A2**

## DEMANDE DE BREVET EUROPEEN

(21) Numéro de dépôt: **81400011.3**

(22) Date de dépôt: **07.01.81**

(51) Int. Cl.³: **G 01 J 1/16, G 01 N 21/31**

(30) Priorité: **18.01.80 FR 8001073**

(43) Date de publication de la demande: **29.07.81**
**Bulletin 81/30**

(84) Etats contractants désignés: **CH DE GB IT LI NL**

(71) Demandeur: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Anitoff, Oleg, 16ter, rue de l'Eglise, F-91570 Bievres (FR)**

(74) Mandataire: **Mongredien, André et al, c/o Brevatome 25, rue de Ponthieu, F-75008 Paris (FR)**

(54) **Système de traitement et de mesure des signaux délivrés par chaque détecteur dans un spectromètre à modulation.**

(57) L'invention concerne un système de traitement et de mesure des signaux délivrés par chaque détecteur dans un spectromètre à modulation de faisceaux lumineux.

Ce système comprend, pour chaque détecteur, une chaîne d'amplification des signaux délivrés par ce détecteur, des moyens de mesure (10) connectés en sortie de la chaîne d'amplification, chaque chaîne comprenant au moins un amplificateur sélectif (29), accordé sur la fréquence de modulation des faisceaux, suivi d'un détecteur bialternance (33). Il est caractérisé en ce que chaque chaîne d'amplification comprend en outre un filtre électrique actif (40) rejetant l'ondulation résiduelle de fréquence double de la fréquence de modulation, ce filtre est connecté entre une sortie du détecteur bialtenance (33), et une entrée des moyens de mesure (10).

Application aux spectromètres à modulation de faisceaux lumineux.

La présente invention concerne un système de traitement et de mesure des signaux délivrés par chaque détecteur, dans un spectromètre à modulation de faisceaux lumineux. Elle s'applique à la simplification des spectromètres à modulation destinés par exemple au dosage simultané de plusieurs composés dissous dans un solvant.

Parmi les analyseurs spectrométriques connus, certains comprennent une source de lumière associée à des moyens qui permettent de diviser le faisceau de lumière de la source, en plusieurs faisceaux, les uns de référence, les autres de mesure ; les faisceaux de mesure traversent l'échantillon.

Les énergies des faisceaux de référence et de mesure sont mesurées sur des périodes très courtes. Ces périodes correspondent à la fréquence de modulation des faisceaux ; cette modulation est réalisée par des moyens électro-optiques qui sont généralement constitués par un disque tournant, portant des secteurs opaques et transparents alternés, se déplaçant de manière à couper les deux faisceaux. L'énergie transmise par l'échantillon et l'énergie du faisceau de référence, sont détectées par des moyens électro-optiques de détection qui sont associés à des moyens de mesure permettant de mesurer la différence des énergies des faisceaux de référence et de mesure, et ainsi de déterminer l'absorption lumineuse plus ou moins grande de l'échantillon. Ces mesures d'absorption peuvent être effectuées à différentes longueurs d'ondes ; il suffit pour cela de sélectionner, grâce à des moyens appropriés, les longueurs d'ondes des faisceaux de référence et de mesure, en fonction de l'échantillon à étudier. Les moyens de détection des énergies des faisceaux de référence et de mesure comprennent, pour chaque longueur d'ondes sélectionnée, un détecteur photo-électrique,

B 6724.3 DC

2    0032852

sensible à cette longueur d'ondes et pour chacun de ces détecteurs, une chaîne d'amplification du signal issu du détecteur correspondant ; la sortie de cette chaîne est reliée aux moyens de mesure. Ces détecteurs reçoivent alternativement les faisceaux de référence et de mesure grâce aux moyens de modulation décrits plus haut.

Les spectromètres qui sont mentionnés plus haut sont des spectromètres à deux voies (agissant à deux longueurs d'ondes $\lambda_1$ et $\lambda_2$) et à double faisceau (l'un de référence, l'autre de mesure), ou des spectromètres à une seule voie (agissant à une longueur d'onde) et à double faisceau.

Traditionnellement, les analyseurs spectrométriques qui permettent d'analyser des échantillons, notamment dans le domaine infra-rouge, mettent en oeuvre, une préamplification du signal fourni par un détecteur infra-rouge et une détection synchrone réalisée grâce à un signal de synchronisation prélevé sur les moyens de modulation des faisceaux de référence et de mesure. Cette détection synchrone présente un inconvénient majeur : elle complique beaucoup les circuits de traitement et de mesure des signaux issus des détecteurs et par conséquent, rend très onéreux les spectromètres qui l'utilisent. De plus, cette détection synchrone exige que le bruit ne présente aucune relation de phase avec le signal de synchronisation issu des moyens de modulation ; enfin, la constante de temps du filtrage réalisé après détection synchrone des faisceaux de mesure et de référence, doit être plus grande que la période de fluctuation de plus basse fréquence du bruit.

L'invention a pour but de remédier à ces inconvénients et notamment de simplifier les circuits de traitement et de mesure des signaux issus des détecteurs

B 6724.3 DC

dans un spectromètre à modulation de faisceaux lumineux. Elle permet également d'éviter d'adjoindre au moyen de détection, un filtre présentant une constante de tempo trop longue, grâce à l'utilisation d'un filtre électrique actif.

L'invention a pour objet un système de traitement et de mesure des signaux délivrés par chaque détecteur, dans un spectromètre à modulation de faisceaux lumineux, comprenant pour chaque détecteur, une chaîne d'amplification des signaux délivrés par ce détecteur, et des moyens de mesure, connectés en sortie de chaque chaîne d'amplification ; ce système est caractérisé en ce que la chaîne d'amplification comprend au moins un amplificateur sélectif, accordé sur la fréquence de modulation des faisceaux.

Selon une autre caractéristique de l'invention, la chaîne d'amplification comprend en outre un filtre électrique actif, accordé sur une fréquence double de la fréquence de modulation des faisceaux, ce filtre est connecté entre la sortie de l'amplificateur correspondant et les moyens de mesure.

Selon une autre caractéristique, le spectromètre comprenant des moyens de modulation des faisceaux constitués par un disque tournant présentant des secteurs opaques et transparents alternés devant chacun des faisceaux, le système comprend des moyens pour entraîner le disque en rotation, ces moyens étant pilotés par un oscillateur à quartz.

Selon une autre caractéristique de l'invention, les moyens d'entraînement du disque tournant comprennent un moteur synchrone alimenté par un convertisseur continu alternatif piloté par l'oscillateur à quartz, ce convertisseur étant alimenté par une source électrique de courant continu.

Selon une autre caractéristique, le convertis-

B 6724.3 DC

seur continu alternatif piloté par l'oscillateur à quartz alimente en outre la chaîne d'amplification, par l'intermédiaire d'un convertisseur alternatif-continu.

Selon une autre caractéristique, les moyens d'entraînement du disque tournant comprennent un moteur pas à pas alimenté par un convertisseur alternatif-continu, par l'intermédiaire d'un circuit logique de commande, piloté par l'oscillateur à quartz.

Selon une autre caractéristique, les faisceaux lumineux sont produits par une source lumineuse, de type halogène ou de type "à carbure de silicium".

Selon une autre caractéristique, le convertisseur continu-alternatif piloté par l'oscillateur à quartz, alimente en outre au moins l'un des détecteurs par l'intermédiaire d'un convertisseur alternatif-continu.

Selon une autre caractéristique, ledit détecteur est en outre alimenté par un générateur de courant, lui-même alimenté par la source électrique de courant continu.

Selon une autre caractéristique, un convertisseur altenatif-continu alimente au moins l'un des détecteurs.

Selon une autre caractéristique, le convertisseur alternatif-continu alimente le détecteur par l'intermédiaire d'un générateur de courant.

Selon une autre caractéristique, le convertisseur alternatif-continu alimente le détecteur par l'intermédiaire d'un convertisseur continu-continu.

Selon une autre caractéristique, le convertisseur alternatif-continu alimente la chaîne d'amplification.

Enfin, selon une caractéristique particulière, le convertisseur alternatif-continu est alimenté par une ligne de type "Secouru".

B 6724.3 DC

D'autres caractéristiques et avantages de l'invention ressortiront mieux de la description qui va suivre, donnée en référence aux dessins annexés, dans lesquels :

- la figure 1 représente schématiquement un premier mode de réalisation d'un système conforme à l'invention, dans un spectromètre à modulation de faisceaux, à deux voies ;

- la figure 2 représente de manière plus détaillée, la chaîne d'amplification du système de l'invention ;

- la figure 3 représente un autre mode de réalisation du système de l'invention, dans un spectromètre à modulation de faisceaux à une voie;

- la figure 4 représente un filtre passe-bas classique d'ordre 2 ;

- la figure 5 est un schéma équivalent du filtre rejecteur double T de la figure 3;

- les figures 6 et 7 représentent deux autres modes de réalisation de ce filtre rejecteur double T.

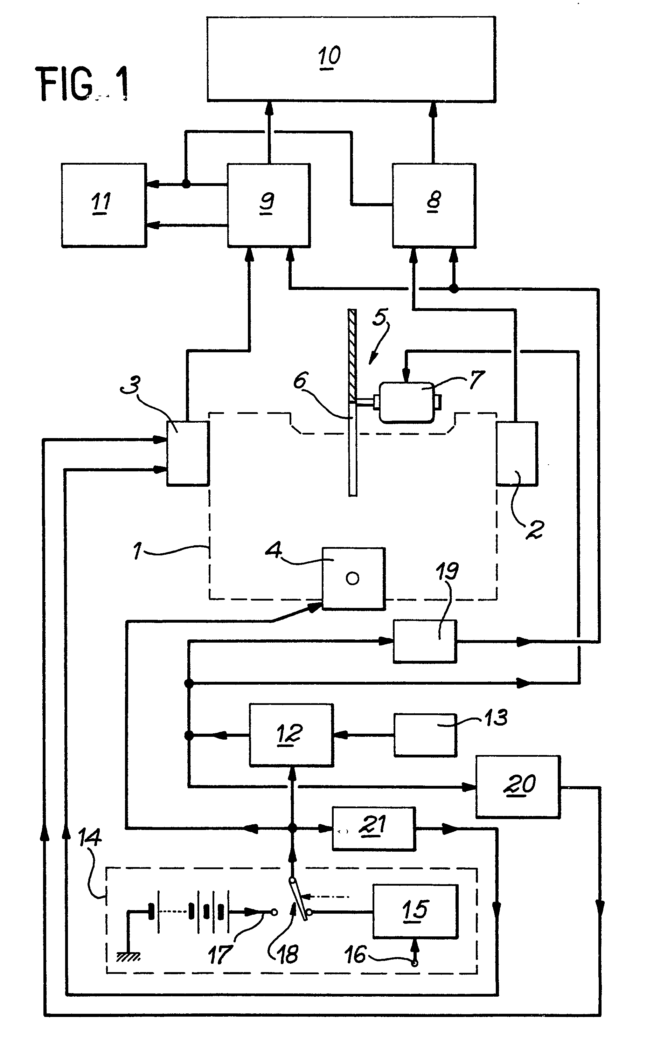

La figure 1 représente un mode de réalisation d'un système conforme à l'invention et permettant le traitement et la mesure des signaux délivrés par chaque détecteur 2, 3 dans un spectromètre 1, à modulation de faisceaux lumineux émis par une source lumineuse 4 constituée de préférence , par une lampe de type halogène très stable ou par une lampe au carbure de silicium connue sous la dénomination commerciale "GLOBAR". Le spectromètre, représenté schématiquement en 1 sur la figure, est par exemple, un spectromètre à deux voies, de type connu, comprenant notamment deux détecteurs 2, 3 sensibles respectivement à deux longueurs d'onde différentes.

Ce spectromètre comprend également des moyens non représentés qui permettent de diviser le faisceau de lumière de la source, en faisceaux de référence et de
mesure. De manière connue, le faisceau de mesure traverse un échantillon à analyser et on mesure la différence des énergies entre les faisceaux de référence
et de mesure.

Enfin, le spectromètre comprend des moyens
de modulation, constitués par un disque tournant 6,
entraîné par un moteur 7 et présentant des secteurs
opaques et transparents alternés. Les détecteurs 2, 3
permettent de détecter les énergies des faisceaux
de référence et de mesure, pour chacune des longeurs
d'onde  sélectionnées dans le spectromètre. Ces
détecteurs reçoivent alternativement les faisceaux
de référence et de mesure, grâce aux secteurs opaques
et transparents alternés du disque tournant 6. Il est
bien évident que le nombre de ces détecteurs a été
limité à deux, mais qu'il pourrait être différent.

Le système de traitement et de mesure, conforme
à l'invention comprend des chaînes d'amplification 8,
9 connectées en sortie de chacun des détecteurs, et des
moyens de mesure 10, connectés aux sorties des chaînes
d'amplification 8, 9. Ces chaînes d'amplification peuvent
bien entendu, permettre l'observation des courbes
d'analyse sur un oscilloscope 11.

Les longueurs d'onde sélectionnées  dans le
spectromètre correspondent bien entendu, aux composants
de l'échantillon qui absorbent respectivement des radiations dans ces longueurs d'onde. Lorsque les secteurs
opaques et transparents alternés du disque défilent devant
chacun des faisceaux de référence et de mesure, chaque
détecteur reçoit alternativement la lumière transmise
par l'échantillon et la lumière du faisceau de référence.
Les détecteurs 2, 3 délivrent donc des signaux alternatifs déphasés par exemple de 180° ou 90°, selon que le
disque tournant présente deux ou quatre secteurs. Dans
l'état connu de la technique, les chaînes d'amplification 8, 9 sont synchronisées sur le signal fourni par un détecteur optique par exemple, situé en regard du disque tournant 6. Comme on l'a indiqué précédemment, ce type de synchronisation a pour principal inconvénient de rendre les mesures très sensibles au bruit qui accompagne les signaux de mesure, ce bruit pouvant être en phase avec les signaux de modulation. De plus, cette synchronisation complique les circuits de traitement et de mesure, associés au spectromètre.

Dans le système de traitement et de mesure, conforme à l'invention, la chaîne d'amplification qui est associée à chacun des détecteurs, comprend au moins un amplificateur sélectif, accordé sur la fréquence de modulation des faisceaux de référence et de mesure. Cette chaîne d'amplification sera décrite plus loin en détail. Elle a pour principal avantage, comme mentionné plus haut, de supprimer toute synchronisation à partir d'une détection de la fréquence du disque tournant. Comme on le verra plus loin en détail, chaque chaîne d'amplification comprend en outre un filtre électrique actif, accordé sur la fréquence double de la fréquence de modulation des faisceaux et connecté entre la sortie de chaque amplificateur et les moyens de mesure 10. Dans le système de l'invention, le moteur 7 qui entraîne le disque tournant 6, est de type synchrone, alimenté par un convertisseur continu-alternatif 12 piloté par un oscillateur à quartz 13. Ce moteur peut aussi être un moteur pas à pas piloté par quartz. Ce convertisseur continu-alternatif est lui-même alimenté par une source électrique de courant continu 14. Cette source électrique de courant continu, peut être constituée soit par une alimentation stabilisée 15 en courant continu, elle-même alimentée par la tension du secteur alternatif 16, soit par une batterie d'accumulateurs 17. Un commutateur 18 à deux positions, commandable soit électriquement, soit manuellement, permet d'alimenter les différents moyens du système de traitement et de mesure, à partir de la batterie d'accumulateurs 17 en cas de panne du secteur 16. La source d'alimentation stabilisée 15 ainsi que le convertisseur continu-alternatif 12 piloté par l'oscillateur à quartz 13 sont classiques dans l'état de la technique et ne seront pas décrits plus en détail. Le convertisseur alimente également les chaînes d'amplification 8, 9 par l'intermédiaire d'un convertisseur alternatif-continu 19.

La source lumineuse 4 est alimentée directement par l'alimentation stabilisée 14. A titre d'exemple, pour le système de traitement et de mesure représenté sur la figure, l'alimentation stabilisée 15 est une alimentation 220 V alternatif - 24 V continu, le convertisseur continu-alternatif 12 est un convertisseur 24 V continu-220 V alternatif, tandis que le convertisseur alternatif-continu 19 est un convertisseur 220V alternatif - 15 V continu. Si les analyses sont à réaliser dans des longueurs d'onde fixes, par exemple pour le dosage d'éléments contenus dans une solution, on utilise des détecteurs infra-rouges qui présentent un très grand rapport signal/bruit, dans un domaine de longueurs d'onde assez étroit. C'est ainsi par exemple, que le détecteur 3 est un détecteur Se-Pb, présentant une bande passante allant de 3 à 7 microns, refroidi par effet Peltier. Le détecteur 2 est une photodiode de type PIN au silicium qui présente une bande passante inférieure à 1 micron. Le détecteur 3 est alimenté par le convertisseur continu-alternatif 12, par l'intermédiaire d'un convertisseur alternatif-continu 20 qui fournit à ce détecteur une tension continue de 90 V par exemple, et par l'intermédiaire d'un générateur de courant 21 alimenté par la source électrique 14 de courant continu. Ce générateur de courant permet de refroidir le détecteur 3 par effet Peltier. Ainsi, dans le système qui

　　　　　　　　　　　　　　　　　　　　**0032852**

vient d'être décrit, les chaînes d'amplification comprennent au moins un amplificateur sélectif, accordé sur la fréquence de modulation des faisceaux de référence et de mesure. Les chaînes d'amplification, comme on le verra par la suite, sont simples puisqu'elles utilisent des circuits à amplificateur opérationnel.

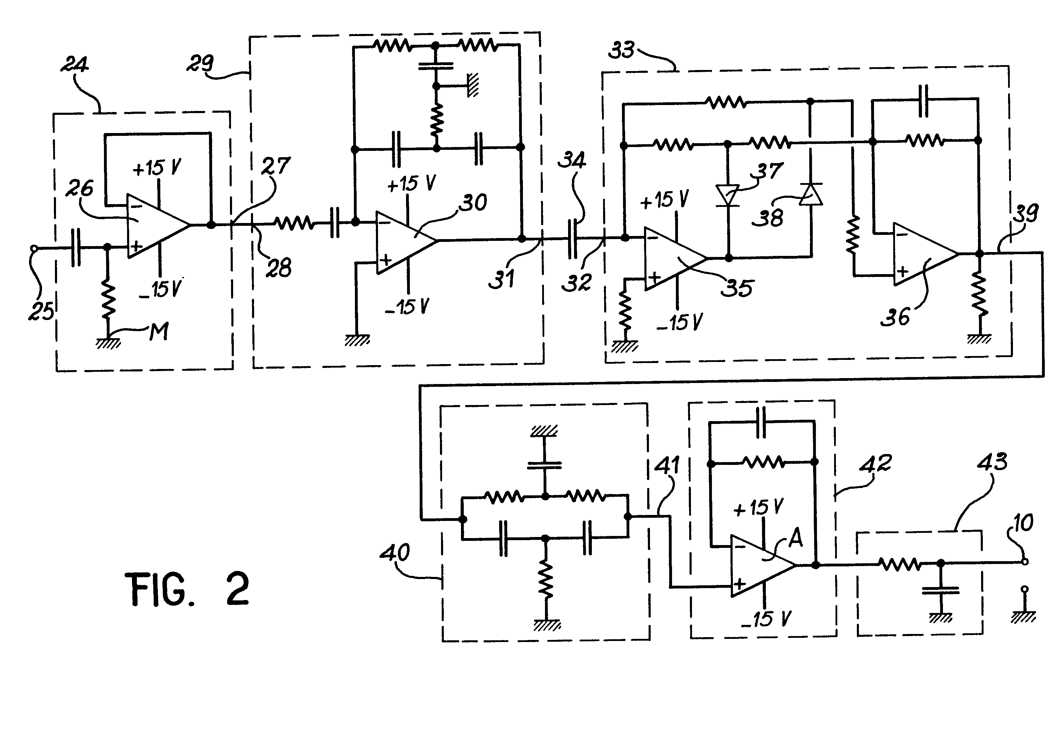

En référence à la figure 2, on a représenté plus en détail les circuits qui interviennent dans les chaînes d'amplification 8, 9 et qui comprennent, tout d'abord, un adaptateur d'impédance 24 constitué par un montage classique à amplificateur opérationnel, alimenté par une tension continue de 15 V délivrée par le convertisseur alternatif-continu 19. L'entrée 25 de cet adaptateur d'impédance est reliée, soit directement à la sortie du détecteur 2, pour la chaîne d'amplification 8, soit à la sortie d'un préamplificateur, non représenté et constitué de manière connue, pour la chaîne d'amplification 9 qui est connectée à la sortie du détecteur 3. L'amplificateur opérationnel 26 est alimenté par une tension continue de ± 15 V, fournie par le convertisseur alternatif-continu 19 ; les autres éléments de cet adaptateur qui est constitué de manière connue, ne sont pas référencés sur la figure 2. M représente sur cette figure la masse de référence. La sortie 27 de l'adaptateur 24 est reliée à l'entrée 28 d'un amplificateur sélectif 29, dont la bande centrale est de 30 Hertz par exemple, dans le mode de réalisation du système selon l'invention. Cet amplificateur sélectif, constitué lui aussi de manière connue, comprend un amplificateur opérationnel 30 alimenté par une tension continue de ± 15 V fournie par le convertisseur alternatif-continu 19. Les autres éléments de cet amplificateur sélectif constitué de manière connue, ne sont pas référencés sur la figure. La sortie 31 de l'amplificateur 29 est reliée à l'entrée 32 d'un détecteur bialternance 33,

B 6724.3 DC

par l'intermédiaire d'un condensateur de découplage 34. Ce détecteur est lui-même constitué de manière connue par un circuit comprenant deux amplificateurs opérationnels 35, 36 et des diodes 27, 38 ainsi que d'autres éléments non référencés sur la figure. Les amplificateurs opérationnels, comme précédemment, sont alimentés par une tension continue ± 15 V fournie par le convertisseur alternatif-continu 19. La sortie 39 du détecteur 33, peut être reliée à l'entrée des moyens de mesure 10, par exemple par l'intermédiaire d'un filtre actif rejecteur de bande 40, dit "rejecteur double T", qui permet, par exemple, d'éliminer la composante à 60 Hertz de la tension fournie par la chaîne d'amplification ; ce filtre rejecteur de bande est constitué de manière connue : ses éléments ne sont pas référencés sur la figure. Sa sortie 41 peut être reliée à l'entrée des moyens de mesure 10, par exemple par l'intermédiaire d'un amplificateur adaptateur d'impédance 42 et d'un filtre 43, qui sont constitués de manière connue et dont les éléments n'ont pas été référencés sur la figure. Dans l'exemple de réalisation décrit, le filtre rejecteur de bandes provoque une rejection à 60 Hertz, ce qui permet d'utiliser, comme moyen de mesure 10, un voltmètre classique, de type continu. L'amplificateur sélectif, accordé sur la fréquence de modulation des faisceaux de référence et de mesure, permet d'accroître la valeur du rapport signal/bruit tandis que le filtre actif accordable sur la fréquence double de la fréquence de modulation des faisceaux permet également d'éliminer tout bruit gênant dans le signal utile. La fréquence de modulation est très stable, puisque le moteur 7 qui entraîne le disque tournant 6, est un moteur synchrone alimenté par le convertisseur continu-alternatif 12 piloté par l'oscillateur à quartz 13. Ainsi, tous les circuits et moyens représentés, sont alimentés par

B 6724.3 DC

l'intermédiaire d'une batterie d'accumulateurs ou d'une source d'alimentation unique, qui évite toute perturbation d'amplitude ou de fréquence, ce qui est particulièrement important pour les applications médicales du spectromètre. L'emploi sur l'une des voies d'un détecteur 3 refroidi par effet Peltier, grâce au générateur de courant 21, permet de contrôler de manière simple le gain sur cette voie, ce qui peut être très intéressant, notamment pour la mise en service du spectromètre. En cas de panne du secteur ce spectromètre, grâce au système de l'invention, peut fonctionner de manière autonome sur la batterie d'accumulateurs 17. Les différents convertisseurs ainsi que le générateur de courant, qui sont constitués de manière connue, ne sont pas décrits en détail.

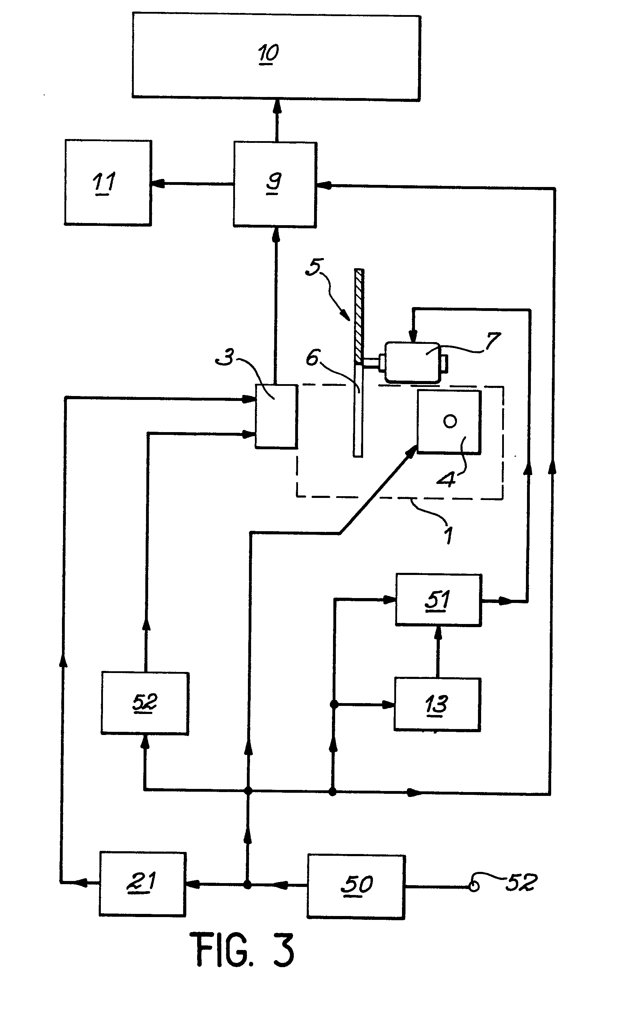

En référence à la figure 3, on a représenté un autre mode de réalisation du système de l'invention, appliqué à un spectromètre à modulation de faisceau, à une voie. Les mêmes éléments portent les mêmes références sur cette figure et sur la figure 1. On a représenté en 1, de manière non détaillée, le spectromètre, qui dans ce mode de réalisation est un spectromètre à modulation de faisceau, à une seule voie et qui comprend notamment un détecteur 3 et une source lumineuse 4, comparables au détecteur et à la source du spectromètre de la figure 1. On a représenté en 9 la chaîne d'amplification dont le détail est donné à la figure 2, tandis que la référence 10 désigne les moyens de mesure connectés à la sortie de cette chaîne d'amplification et que la référence 11 désigne des moyens de visualisation des signaux de sortie de la chaîne d'amplification, constitués par exemple, par un oscilloscope à tube cathodique. Le disque tournant 5 qui comprend des secteurs 6 transparents et opaques alternés, est entraîné par des moyens 7 constitués par un moteur, piloté par l'oscillateur à quartz 13. Dans ce mode de réalisation, le moteur est de type pas à pas, alimenté par un convertisseur alternatif continu 50 par l'intermédiaire d'un circuit logique de commande 51, piloté par l'oscillateur à quartz 13. Ce convertisseur alternatif continu alimente le détecteur 3 par l'intermédiaire du générateur de courant 21 et par l'intermédiaire d'un convertisseur continu-continu 52. Il alimente également la chaîne 9 d'amplification ; il est bien évident, que dans ce mode de réalisation, la spectromètre étant à une seule voie, une seule chaîne d'amplification est représentée sur le schéma. Enfin, le convertisseur alternatif continu 50 est alimenté en 52 par une ligne non représentée, qui peut être de type "Secouru", en cas de panne du réseau sur lequel est branchée cette ligne. Cette ligne de type "Secouru" n'est pas représentée en détail mais il est connu dans l'état de la technique, d'utiliser un système de secours, en cas de panne de réseau.

Il est bien évident, que le système qui est décrit dans ce mode de réalisation et qui est appliqué à un spectromètre à modulation de faisceaux, à une seule voie, pourrait être appliqué au spectromètre à modulation de faisceaux à deux voies, représenté sur la figure 1. Il est bien évident, aussi qu'un seul convertisseur alternatif continu a été représenté sur la figure pour alimenter le générateur de courant 21, le convertisseur continu-continu 51 et la chaîne d'amplification 9, mais qu'il aurait été possible d'utiliser un convertisseur alternatif-continu pour alimenter respectivement chacun de ces éléments, chacun de ces convertisseurs étant relié à la ligne de type "Secouru". Dans ce deuxième mode de réalisation du système conforme à l'invention, le spectromètre comporte un seul détecteur qui peut être un détecteur Pb-Se, refroidi par effet Peltier, sensible à une longueur d'onde de quatre microns,

B 6724.3 DC

comme dans le premier mode de réalisation. La source lumineuse 4 peut être, comme dans le premier mode de réalisation, une source de type halogène ou une source à carbure de silicium, connue sous la dénomination commerciale "GLOBAR".

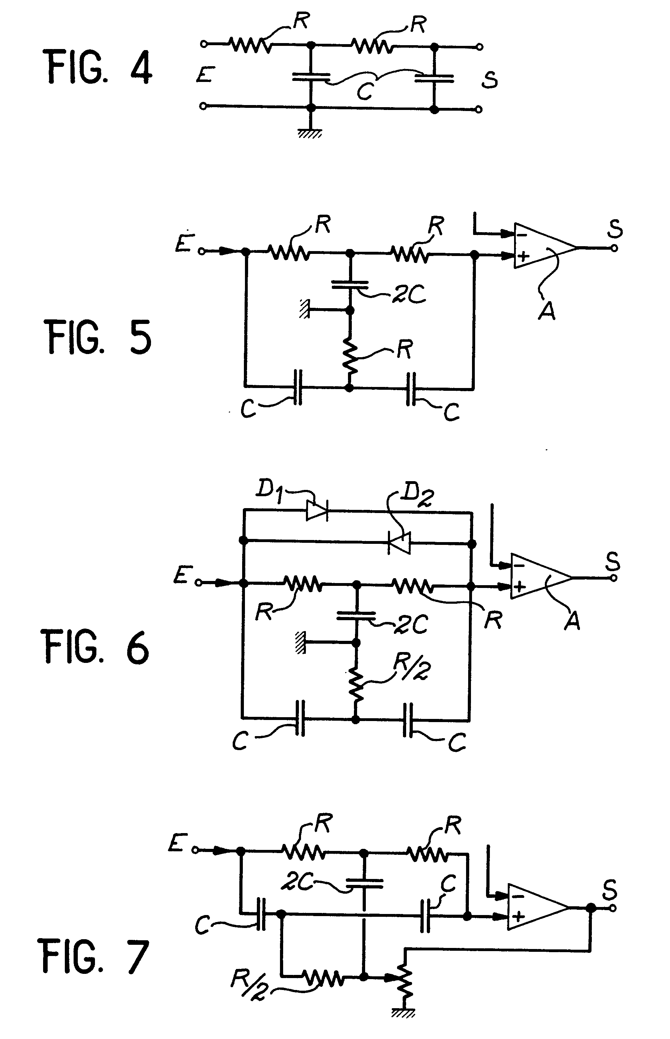

La figure 4 représente un filtre passe-bas classique d'ordre 2. Ce filtre n'est pas utilisé dans l'invention car il présente des inconvénients. Il est par contre utilisé à la sortie des détecteurs synchrones conventionnels pour filtrer les signaux de sortie de ces détecteurs. Il est constitué par la mise en cascade de deux filtres d'ordre I (filtre et post-filtre). L'un des objets de l'invention est de mettre en évidence le fait qu'à rejection de l'ondulation résiduelle égale, un réjecteur accordé (double T) permet un temps de réponse plus court, ou ce qui est équivalent, qu'à temps de réponse égal, la réjection de l'ondulation résiduelle apportée par un réjecteur accordé, est meilleure.

Si l'on désigne par E et S l'entrée et la sortie du filtre réprésenté sur la figure et par C et R les valeurs respectives des résistances et condensateurs qui le constituent, le temps de réponse de ce filtre est $T_1 = 2$ RC.

La figure 5 est un schéma équivalent du filtre rejecteur double T, 40, de la figure 2, suivi de l'amplificateur opérationnel A du circuit adaptateur d'impédance 42. Sur la figure 5, on a désigné les résistances et condensateurs par les valeurs respectives R, R/2, C, 2C. En signal carré, le réjecteur en double T se comporte comme un différentiateur de constante de temps $\frac{RC}{2}$ (branche inférieure) en parallèle sur un intégrateur (filtre passe-bas d'ordre I) de constante de temps $T_2 = R.2C = T_I$. Donc, hormis un bref transitoire dû à la branche différentiatrice, les deux circuits ont le même temps de réponse en régime impulsionnel.

Considérons maintenant la rejection apportée en régime sinusoïdal par les filtres des figures 4 et 5, la fréquence choisie étant la fréquence d'accord du filtre en double T :

$$F = 1/2 \pi RC$$

- pour le réjecteur en double T, la réjection de la fréquence d'accord est théoriquement infinie. Pratiquement, avec des composants de tolérance courante (5%), elle est d'au moins (40dB).

- pour le réjecteur passif d'ordre 2, la réjection est de 12dB (résultat de la théorie élémentaire des filtres RC), soit trente fois moins bonne qu'avec le réjecteur dans le plus mauvais cas.

Grâce à un autre mode de réalisation du filtre réjecteur double T, représenté sur la figure 6 et qui peut être utilisé dans l'invention, il est possible de réduire le temps de réponse du réjecteur en double T sans altérer ses qualités de réjection, par l'emploi de deux diodes antiparallèles dont l'impédance est très élevée si l'amplitude du signal d'entrée $(D_1, D_2)$ (ondulation résiduelle) est inférieure à leur tension de seuil (0,6V pour les diodes au silicium de type IN4I48), et devient faible, annulant ainsi la constante de temps de filtre, si la tension d'entrée varie de plus de 0,6V pendant un temps inférieur à la constante de temps du réseau en double T. Sur cette figure, R, R/2, C et 2C désignent les valeurs des résistances et condensateurs correspondants.

La figure 7 représente un autre mode de réalisation du filtre réjecteur double T, qui peut être utilisé dans l'invention. Dans ce mode de réalisation, on introduit à la base du réjecteur en double T une réaction variable, en réinjectant une partie de la tension de sortie de l'amplificateur opérationnel. Cette réaction augmente en fait le coefficient de surtension du réjecteur qui devient alors un véritable filtre actif.

B. 6.724-3 DC

REVENDICATIONS

1. Système de traitement et de mesure des
signaux délivrés par chaque détecteur (2,3) dans un
spectromètre (1) à modulation de faisceaux lumineux,
comprenant pour chaque détecteur (2,3) une chaîne
d'amplification (8,9) des signaux délivrés par ce
détecteur et, des moyens de mesure (10) connectés en
sortie de la chaîne d'amplification, chaque chaîne
d'amplification (8,9) comprenant au moins un amplificateur sélectif (29) accordé sur la fréquence de modulation des faisceaux, suivi d'un détecteur bialternance
(33) des signaux provenant de l'amplificateur
sélectif, caractérisé en ce que chaque chaîne d'amplification (8,9) comprend en outre un filtre électrique
actif (40) rejetant l'ondulation de fréquence double de
la fréquence de modulation des faisceaux, ce filtre (40)
étant connecté entre une sortie du détecteur bialternance
(33) et une entrée des moyens de mesure (10).

2. Système selon la revendication 1, caractéri-
·sé en ce que le spectromètre comprenant des moyens de
modulation des faisceaux constitués par un disque tournant (6) présentant des secteurs opaques et transparents
alternés devant chacun des faisceaux, le système comprend
des moyens (7,12) pour entraîner ce disque (6) en
rotation, ces moyens étant pilotés par un oscillateur à
quartz (13).

3. Système selon la revendication 2, caractérisé en ce que les moyens pour entraîner le disque tournant
(6) comprennent un moteur synchrone (7) alimenté par un
convertisseur continu alternatif (12) piloté par l'oscillateur à quartz (13).ce convertisseur étant alimenté par une source électrique (14) de courant continu.

4. Système selon la revendication 3, caractérisé en ce que le convertisseur continu-alternatif (12)
piloté par l'oscillateur à quartz (13) alimente en outre
la chaîne d'amplification (8,9) par l'intermédiaire d'un
convertisseur alternatif-continu (19).

B. 6.724-3 DC

0032852

5. Système selon la revendication 2, caractérisé en ce que les moyens pour entraîner le disque tournant (6) comprennent un moteur (7) pas à pas alimenté par un convertisseur alternatif-continu (50), par l'intermédiaire d'un circuit logique (51) de commande, piloté par l'oscillateur à quartz (13).

6. Système selon la revendication 2, caractérisé en ce que le faisceau lumineux est produit par une source lumineuse (4) de type halogène ou de type à carbure de silicium.

7. Système selon la revendication 4, caractérisé en ce que le convertisseur continu-alternatif (12) piloté par l'oscillateur à quartz (13) alimente en outre au moins l'un des détecteurs (3), par l'intermédiaire d'un convertisseur alternatif-continu (20).

8. Système selon la revendication 7, caractérisé en ce que ledit détecteur (3) est en outre alimenté par un générateur de courant (21) lui-même alimenté par la source électrique de courant continu (14).

9. Système selon la revendication 5, caractérisé en ce que le convertisseur alternatif-continu (50) alimente en outre au moins l'un des détecteurs (3).

10. Système selon la revendication 9, caractérisé en ce que le convertisseur alternatif-continu (50) alimente en outre le détecteur (3) par l'intermédiaire d'un générateur de courant (21).

11. Système selon la revendication 9, caractérisé en ce que le convertisseur alternatif-continu (50) alimente en outre le détecteur (3) par l'intermédiaire d'un convertisseur continu-continu (52).

12. Système selon la revendication 9, caractérisé en ce que le convertisseur alternatif continu (50) alimente en outre la chaîne d'amplification (9).

B. 6.724-3 DC

13. Système selon l'une quelconque des
revendication 5, 9 à 12, caractérisé en ce que le
convertisseur alternatif-continu (50) est alimenté par
une ligne (52) de type "Secouru".

14. Système selon l'une quelconque des revendications 1 à 12, caractérisé en ce que le filtre
électrique actif (40) est un filtre rejecteur de bande,
de type double T.

FIG. 1

0032852

1/4

0032852

FIG. 2

FIG. 3

0032852

FIG. 4

FIG. 5

FIG. 6

FIG. 7